# EUROPEAN PATENT APPLICATION

(11) **EP 2 866 435 A1**
(43) Date of publication of application: **29.04.2015**
(21) Application number: 13189696.1
(22) Date of filing: 22.10.2013
(51) Int. Cl.: H04N 5/445

(54) **Consumer device and method for adapting the duration of a temporary control status related to the display of a user interface element**

(71) Applicant: TP Vision Holding B.V., 1097 JB Amsterdam (NL)
(72) Inventor: Hammer, Martin, 1097 JB Amsterdam (NL)
(74) Representative: Busch, Patrick

(57) **Abstract**

A consumer device comprising means for displaying a user interface containing user interface elements (12) on a screen (11), and means for controlling the consumer device (13), characterized in that the device is configured to modify, in response to a user control activity, a duration of a temporary control status related to the display of a user interface element (12).

## Description

### FIELD OF THE INVENTION

The present invention relates consumer devices capable of displaying elements of a user interface. The invention further relates to a method of displaying elements of a user interface.

### BACKGROUND OF THE INVENTION

Many electronic consumer devices, such as flat televisions, set-top boxes, Blu-ray players, home theatre systems, tablets or mobile phones, are capable of showing a user interface on a display and allow the user to control the device through this user interface, commonly with the help of a remote control or a touch screen. Elderly persons often experience difficulties in controlling such devices. Investigation into these difficulties have led to a number of possible improvements. For example, in order to help persons with reduced eyesight several measures have been implemented in products, including the use of larger fonts and higher contrast in the on-screen user interface, remote controls with larger buttons and with high contrast text printed on the buttons, or spoken feedback on the user interface and on user actions. To reduce the complexity, also remote controls with fewer buttons, and user interfaces with simpler modes have been introduced, in which advanced functionality is hidden to some extent.

Still elderly persons experience problems operating many modern consumer electronic devices, and further improvements to alleviate their problems are needed.

US6094239 A describes a remote control for the elderly where the user can enter commands on the remote control and inspect the commands on a local display before sending them to the device being controlled. This is however for the user a somewhat clumsy way of working, and the required functionality such as a local display and memory increases the cost of the remote control.

### SUMMARY OF THE INVENTION

It is an object of the invention to make electronic consumer devices easier to operate for elderly persons.

This is achieved, according to a first aspect of the invention, by a consumer device comprising means for causing a display of a user interface containing user interface elements on a screen, and means for controlling the consumer device, **characterized in that** the device is configured to modify, in response to a user control activity, a duration of a temporary control status related to the display of a user interface element.

According to a second aspect of the invention the object of the invention is achieved by a method of operating a consumer device comprising means for displaying a user interface containing user interface elements on a screen and means for controlling the consumer device, **characterized in that** the a duration of a temporary control status related to the display of a user interface element is modified in response to a user control activity.

The above device and method have the advantage that by making a control status of the device longer, the user is given more time to operate the device, and operating the device becomes easier. This can be more time to see what is being displayed on a screen, or more time to respond by pressing a button. This is especially helpful for elderly persons who need a bit more time, if only because it takes longer to refocus their eyes between, for example, the screen and the remote control.

An embodiment of a device according to the invention is **characterized in that** the device is arranged to modify a duration of displaying at least one of the user interface elements. This has the advantage that the elderly users can be given more time to read for example feedback information on the screen, even after refocusing their eyes.

A further embodiment device according to the invention is **characterized in that** the device is arranged to modify a duration of a time-out period for user input. This has the advantage that elderly users can be given more time to respond when their input is needed, for example by pressing a button on a remote control

A further embodiment of the device according the invention is **characterized in that** the device is arranged to modify the duration of a temporary control status by a user using the means for controlling the consumer device. This has the advantage that the user can explicitly choose to get more time to read, or to respond, when they want it.

A further embodiment of the device according the invention is **characterized in that** the device is arranged such, that the means for controlling the consumer device are means for remotely controlling the consumer device, and the device is configured to modify the duration of a temporary control status in response to a signal, representative of the identity or type of the control means, received from the means for remotely controlling the consumer device. This has the advantage that dedicated devices for elderly users, such as a remote control, can cause the user to get more time for reading and responding, without the need for the user to take special actions to achieve this.

A further embodiment of the device according the invention is **characterized in that** the device is arranged to detect a specific control behaviour of the user using the means for controlling the consumer device and to modify the duration of a control status in response to the detected specific control behaviour. This has the advantage that the device can automatically detect if the user is having trouble controlling the device due to timing issues, and then automatically give the user more time to read or respond.

### BRIEF DESCRIPTION OF THE DRAWINGS

Further embodiments of the device according to the invention and the advantages thereof will be apparent from and elucidated further with reference to the accompanying drawings, in which
Fig. 1 shows a television with on-screen user interface and a remote control;
Fig. 2 shows a system diagram;
Fig. 3 shows a flow chart;
Fig. 4 shows a flow chart.

### DETAILED DESCRIPTION OF EMBODIMENTS

The following description focusses mainly on embodiments of the invention applied in a flat television by way of example. However, it must be appreciated that the invention is not limited to televisions only, but may be applied in other consumer devices that incorporate a display or are connected to a display during operation such as, for example, DVD players, Blu-ray Disk players, home theatre systems, tablets or mobile phones.

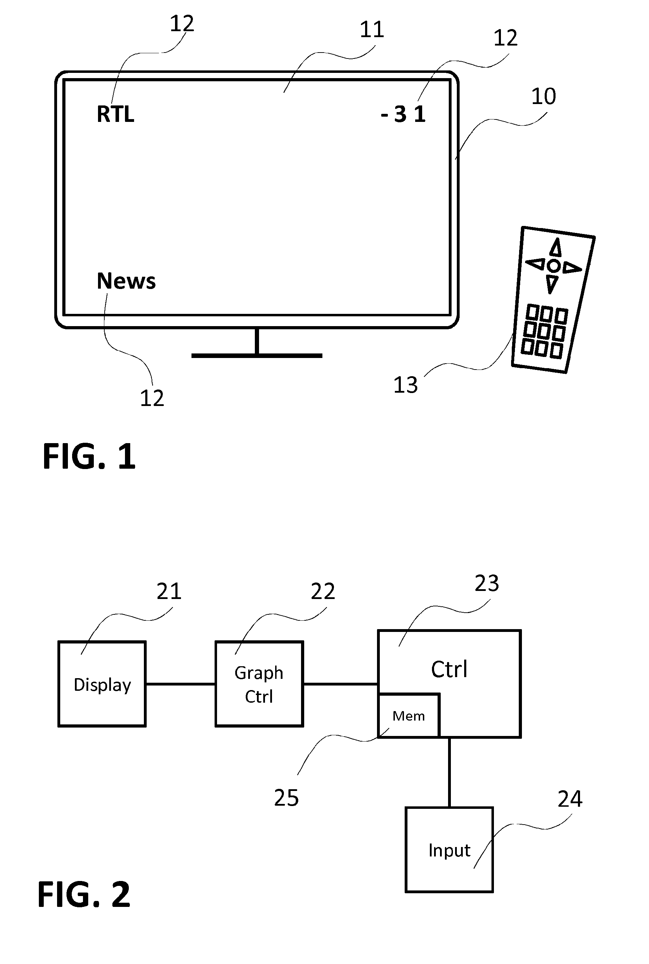

Figure 1 illustrates an example embodiment of the invention for a television 10 incorporating a display screen 11. The television 10 is controlled by means of a remote control 13, which contains a number of buttons, commonly including digit keys and navigation keys. The television 10 is configured to display a user interface on the screen 11. Other devices, such as Blu-ray Disk players or home theatre systems, may not contain a display, but they may be connected to a television or monitor on which they can cause their user interface to be displayed. In Figure 1 several user interface elements 12 are shown, in this example there are indications of a channel number (-31), a channel name and a program name (NEWS). Such user interface elements are typically shown during and after a channel change, and remain visible for a fixed limited duration.

Elderly persons may experience difficulties in controlling their devices; even a seemingly simple task such as changing a channel can pose difficulties. The inventors have realised that one of the reasons for this is the duration of visible feedback in the user interface. User interface elements like the channel number in Figure 1 are typically shown for only a short period, and that period may be too short for elderly persons having difficulty, after pressing buttons on the remote control, to refocus their eyes from the remote control at close range to the television screen further away. In the case of a channel change there is the additional complication of multi-digit channel numbers. For example, when the user wishes to change to channel number 31, he first enters the digit '3' by pressing its key. The user interface then commonly shows feedback in the form of a text '- - 3'. If the subsequent digit '1' is not entered within a predetermined short time-out period, the television will change to channel 3, and the feedback disappears from the screen after a short period. If the digit '1' is then entered, it is not recognized as belonging together with the previous digit '3', and the television switches to channel number 1, which leaves the user confused about what happened. The inventors have realized that making the duration for which user interface elements are displayed adjustable, and to make this duration longer for elderly persons will alleviate these difficulties. In the same way, the above mentioned time-out periods for recognizing consecutive user commands as belonging together can be adjusted to become longer. Of course this applies not only to the above example of a channel change, but to many other use cases where the user has to switch between looking at the controls and at on-screen user interface elements that provide feedback, or has to give user input within a certain time-out period. In general terms, the solution is to let the consumer device adjust the duration of a temporary control status, so the user gets more time.

A first way to modify the duration of a period for which user interface elements are displayed, or during which period user input can be given, is by making it a setting that can be modified through the user interface, using the remote control or local controls. Devices like a television commonly have many properties that the user can modify using settings in on-screen menus, for example brightness, contrast, colour saturation etc. User interface feedback duration or time-out duration can be configured in a similar way, it can for example be given two possible settings: 'regular' and 'long', where the latter corresponds to an 'elderly mode'.

In a further improvement, the duration of a temporary control status is adjusted automatically, without the need for a user to explicitly set it in a menu. This can be done, in one embodiment, by a remote control which is recognizable as one intended for elderly persons because it sends a signal representative of its type or identity. The remote control commonly sends infrared of RF signals to the device it controls, containing codes that represent the type of device to be controlled (a system code) and the action to be performed (a command code). It could for example transmit 'television' + 'channel up'. There is often no direct means foreseen in such protocols to identify the type of remote control, but this can be solved. In one solution, a command code is added that signifies 'switch to elderly mode', and the remote control can precede any command it sends with this 'switch to elderly mode' command. Another solution is to define a system code that defines a device with adjusted behaviour. Other solutions are conceivable too. The remote control need not be a classic remote control, it could also be, for example, a smartphone or tablet used to control a television or other consumer device.

In another embodiment no dedicated remote control unit is needed, but the device is designed to recognize specific characteristics in the behaviour of the user while the user is controlling the device. In the example of changing a television channel, the television system may detect failed attempts at changing to a specific channel. For example if channels 3, 1 and 31 are selected in succession, the problem as described above has evidently occurred. The television can be configured to then switch to an elderly mode, prolonging the display duration of user interface feedback and prolonging time-out period for consecutive commands, or possibly to do so only after the problem has occurred a few times in succession.

Figure 2 shows a system diagram of an embodiment of a consumer device according to the invention as described above. The device contains a general purpose controller 23, controlled by a program. The program is stored in a memory 25. This controller, amongst other tasks, receives user input from an input device 24. The user interface with its elements is generated by a graphics controller 22, and displayed on a display 21. This is a straightforward basic configuration, but other configurations are possible; for example the display 21 could be external to the device, this will be the case in e.g. a Blu-ray Disk player.

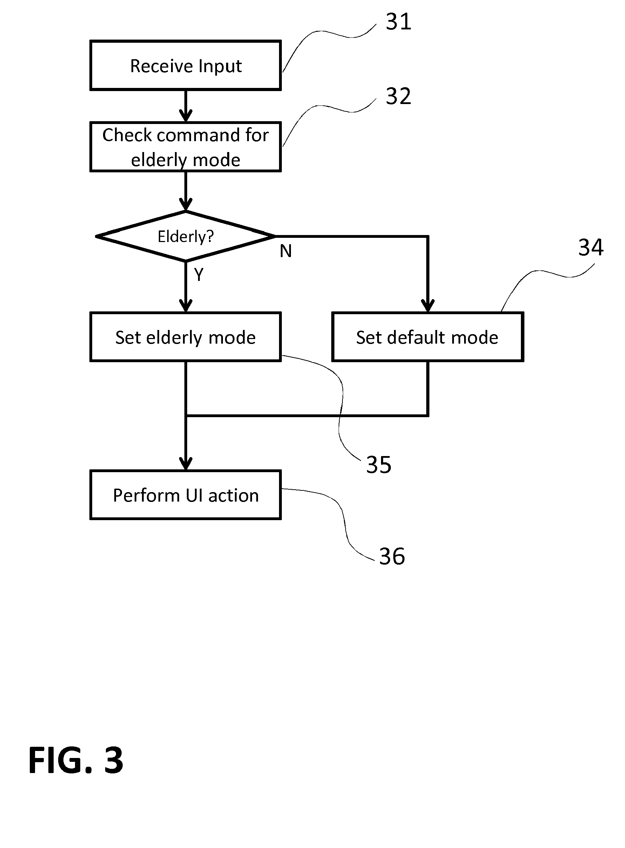

Figure 3 shows, for an embodiments involving the recognition of a remote control intended for elderly users, a flowchart of the main steps of the program stored in the memory 25 related to receiving user input. These steps would be performed repeatedly, as part of a loop. First, in step 31 user input is received, then in step 32 this input is checked for an additional signal indicating that elderly mode should be set. If this signal is found, elderly mode is set in step 35, else normal mode is set in step 34. Subsequently in step 36 the user interface action corresponding to the input received in step 31 is performed. The timing aspects of this action and future actions may have been affected by the elderly mode if that has just been set in step 35.

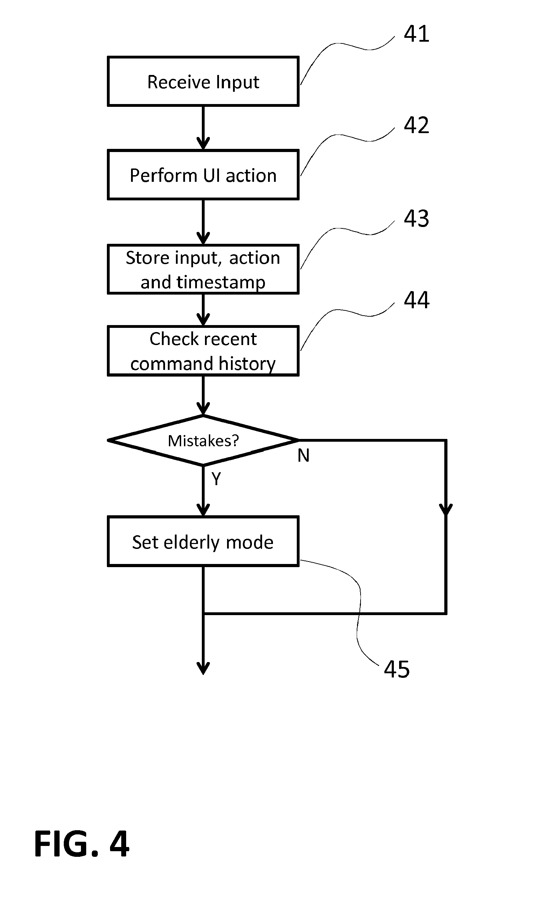

Figure 4 shows, for an embodiments involving the recognition of characteristic control mistakes made by elderly users, a flowchart of the main steps of the program stored in the memory 25 related to receiving user input. These steps would be performed repeatedly, as part of a loop. First, in step 41 the user input is received, and the corresponding UI action is performed in step 42. Next, the input, the action and a timestamp are stored in memory in step 43. In step 44, the recent history of stored inputs and actions are checked for characteristics such as the channel change example described above: repeated attempts to achieve a desired action with some initial mistakes. If such mistakes are found, or possibly after this has been detected multiple times, an elderly mode will be set in step 45. Resetting to normal mode is not described in this example, it could be done, for example, via a menu setting as described earlier. It is not advisable to switch back to normal mode automatically too easily, as this might lead to frequent to and fro-ing between normal and elderly mode, which would only lead to more confusion and irritation.

Although several embodiments of the present invention have been illustrated in the accompanying drawings and described in the above detailed description, it will be understood that the invention is not limited to the embodiments disclosed, but is capable of numerous modifications without departing from the scope of the invention as set out in the following claims.

## Claims

1. A consumer device comprising
- means for causing a display of a user interface containing user interface elements (12) on a screen (11), and
- means for controlling the consumer device (13),
**characterized in that** the device is configured to modify, in response to a user control activity, a duration of a temporary control status related to the display of a user interface element (12).

2. A consumer device as described in claim 1 where the duration of a temporary control status is the duration of displaying at least one of the user interface elements (12).

3. A consumer device as described in claim 1 where the duration of a temporary control status is the duration of a time-out period for user input.

4. A consumer device as described in one of the previous claims where the device is configured to modify the duration of a temporary control status by a user using the means for controlling the consumer device (13).

5. A consumer device as described in claim 1, 2 or 3 where the means for controlling the consumer device (13) are means for remotely controlling the consumer device, and the device is configured to modify the duration of a temporary control status in response to a signal, representative of the identity or type of the control means, received from the means for remotely controlling the consumer device.

6. A consumer device as described in claim 1, 2 or 3 where the device is configured to detect a specific control behaviour of the user using the means for controlling the consumer device (13) and to modify the duration of a temporary control status in response to the detected specific control behaviour.

7. A method of operating a consumer device comprising means for displaying a user interface containing user interface elements (12) on a screen (11) and means for controlling the consumer device (13), **characterized in that** the a duration of a temporary control status related to the display of a user interface element (12) is modified in response to a user control activity.

8. A method as described in claim 7 where the duration of a temporary control status is the duration of displaying at least one of the user interface elements (12).

9. A method as described in claim 7 where the duration of a temporary control status is the duration of a time-out period for user input.

10. A method as described in claim 7, 8 or 9, where the duration of a temporary control status is modified by a user using the means for controlling the consumer device (13).

11. A method as described in claim 7, 8 or 9 where the means for controlling the consumer device (13) are means for remotely controlling the consumer device, and the duration of a temporary control status is modified in response to a signal, representative of the identity or type of the control means, received from the means for remotely controlling the consumer device.

12. A method as described in claim 7, 8 or 9 where the device is configured to detect a specific control behaviour of the user using the means for controlling the consumer device (13) and the duration of a temporary control status is modified in response to the detected specific control behaviour.
